**Europäisches Patentamt**

(19) **European Patent Office**

**Office européen des brevets**

(11) Publication number: **0 324 324 B1**

(12) EUROPEAN PATENT SPECIFICATION

(45) Date of publication of patent specification:
23.10.91 Bulletin 91/43

(51) Int. Cl.⁵: **F16D 1/08, F16C 35/063,**
**F16C 35/073**

(21) Application number: **88850408.1**

(22) Date of filing: **05.12.88**

(54) **A device for attachment of a machine member to a shaft.**

(30) Priority: **11.01.88 SE 8800043**

(43) Date of publication of application:
**19.07.89 Bulletin 89/29**

(45) Publication of the grant of the patent:
**23.10.91 Bulletin 91/43**

(84) Designated Contracting States:
**DE FR GB IT**

(56) References cited:
**DE-A- 2 120 534**
**US-A- 2 397 703**

(73) Proprietor: **SKF Nova AB**
**S-415 50 Göteborg (SE)**

(72) Inventor: **Adolfsson, Rune**
**Skyttegatan 4**
**S-502 43 Boras (SE)**

(74) Representative: **Forsberg, Lars-Ake et al**
**AB SKF Patent Department**
**S-415 50 Göteborg (SE)**

## Description

The present invention relates to an arrangement for securing an inner ring of a bearing to a shaft either directly on the shaft or via a clamping sleeve, wherein said inner ring is provided with a bore for receiving said shaft therein, said bore having a first surface of a shape, such as cylindrical or tapering, corresponding to the shape of the shaft and a second surface corresponding to the shape of a clamping sleeve.

When mounting a bearing on a shaft, it is possible either to mount the inner ring of the bearing directly on the shaft by means of a press fit, a shrinkage fit or a glue joint or by means of a clamping sleeve having tapering grooves or threads, whereby the clamping force around the shaft is caused mainly by axial displacement of the inner ring relative to the clamping sleeve.

Depending on which type of attachment is chosen, e.g. in connection with a ball bearing, different types of inner race rings must be available for the bearing. For mounting directly upon the shaft, which might be cylindrical or tapering, inner race rings having a cylindrical bore or a tapering bore resp. shall be used. At mounting with sleeve are used inner race rings having tapering portions corresponding to those of the clamping sleeve. Furthermore, the dimension of the bearing must be increased. Manufacture and stock-keeping of several different standard types of the same element, i.e. in this case bearing inner race rings, of course implies a big cost.

The purpose of the present invention is to provide a more flexible system for securing an inner ring of a bearing to a shaft, which substantially reduces the required number of standard types of the same element and therefore implies a cost-saving both regarding manufacture and stock keeping. This has been achieved by an arrangement according to claim 1.

An arrangement of the type defined in the preamble of claim 1 is shown in US-A-2397703. This publication shows a ball bearing having an inner ring extending axially in one direction beyond the raceway of the inner ring. In conventional manner the inner ring is provided with a tapering surface intended to cooperate with a corresponding tapering surface on a clamping sleeve. The clamping sleeve has a cylindrical extension upon which the axial clamping force is applied. Theoretically, it might be possible to secure the inner ring to the shaft without clamping sleeve by using the cylindrical inner surface on the extension of the inner ring. However, this would mean that the inner ring was secured to the shaft outwardly of the raceway of the inner ring, thereby resulting in an uncontrollable radial pretensioning of the bearing.

DE-A-2120534 shows an arrangement for securing a machine element to a shaft by means of two clamping rings located at opposite sides of the machine element and having oppositely directed conical clamping surfaces.

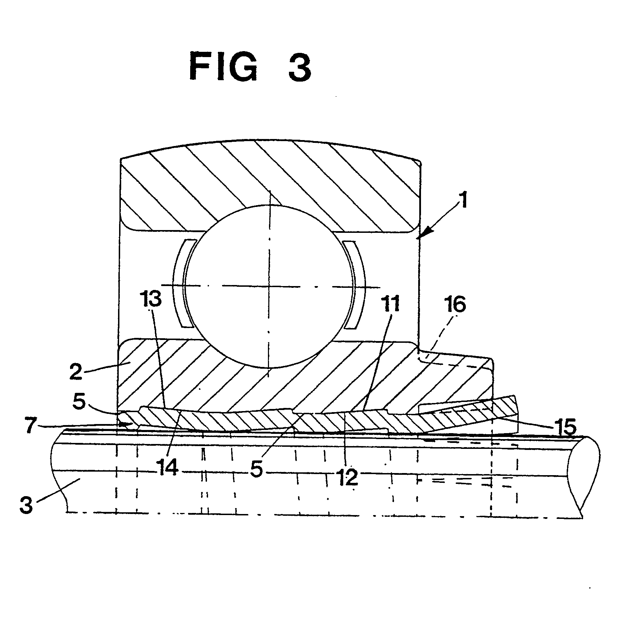

EP-A-251016 discloses a mounting device similar to that shown in Fig. 3 in the present application. However, this prior art design does not allow securing of the inner ring directly on the shaft without using an intermediate sleeve.

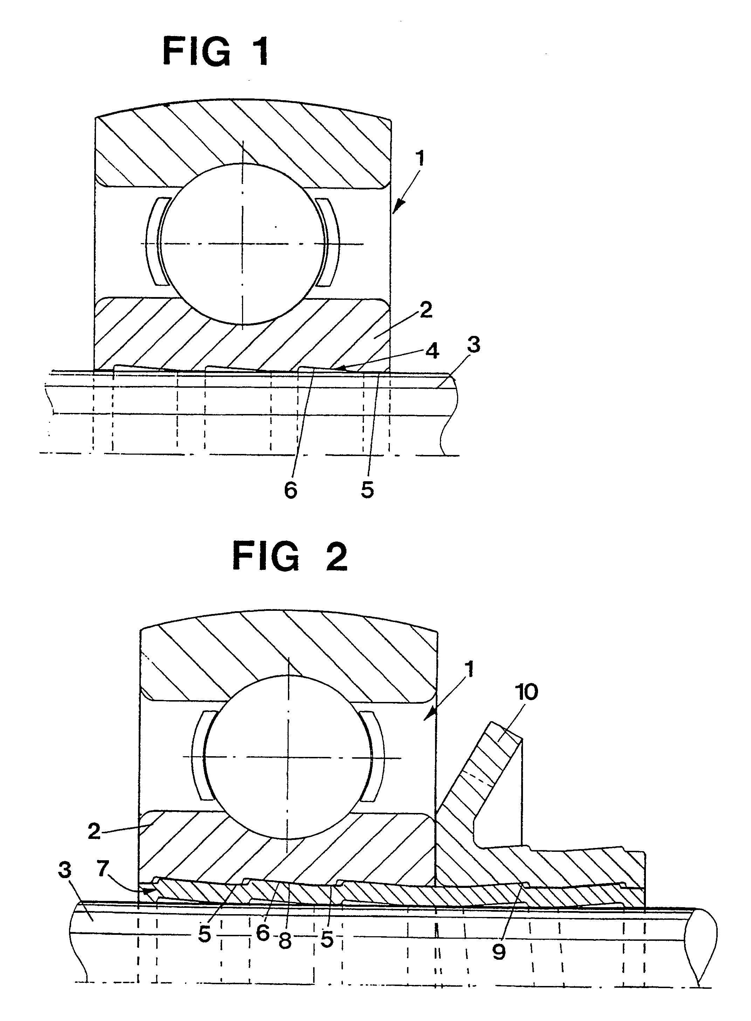

The invention hereinafter will be further described with reference to some embodiments shown in the accompanying drawings. Fig. 1-3 are axial sections through different embodiments of the invention.

In the figures an inner ring 2 of a ball bearing 1 is attached to a shaft 3. The inner ring 2 has a bore 4 provided firstly with cylindrical portions 5 and secondly with tapering portions 6. The bearing shown in Fig. 1 is attached directly upon the cylindrical shaft 3 by means of a shrinkage fit, a press fit or a glue joint, thus that the cylindrical portions 5 of the bore 4 cooperate with the shaft 3. For tapering shafts 3 the portions 5 of course shall have a taper corresponding to that of the shaft 3.

In the embodiment shown in Fig. 2 the inner ring 2 of the bearing 1 is mounted on the shaft 3 via a clamping sleeve 7 having tapering grooves 8 and threads 9. The tapering grooves 8 cooperate with tapering portions 6 of the inner ring 2, whereas a nut 10 is tightened around the threads 9 of the sleeve 7. The inner ring 2 furthermore has cylindrical bore portions 5, which in this case however are inactive. Grooves 8 as well as threads 9 form a small angle to the axis of the sleeve, preferably a smaller angle than the friction angle in each contact, i.e. for an angle $\alpha$ shall $\tan \alpha < \mu$ where $\mu$ is the friction coefficient in each contact. The friction coefficient in a contact steel to steel is about 0.15, whereby the angles are preferably smaller than about 10°. The friction surfaces thereby are irreversible.

The inner ring 2 shown in Fig. 3 has cylindrical portions 5 and tapering thread flanks 11 cooperating with corresponding thread flanks 12 in the clamping sleeve 7, which thread flanks for a small angle to the axis of the sleeve 7. The inner ring 2 is provided with a key grip 16 and tightening of the joint is effected by the inner ring being turned in relation to the sleeve 7. When turned, the two opposed tapering surfaces 13, 14 in the inner ring 2 and in the sleeve 7, respectively, press against each other, whereby a counterstay is established thus that the turning results in the thread flanks 11, 12 being pressed radially against each other and the sleeve 7 is deformed to seizing position around the shaft 3. The sleeve 7 is slotted 15 at the end situated in front of the key grip 16 in order to lock the inner ring 2 against the sleeve 7 by turning, when so required.

According to the invention second surface portions on the inner ring adapted for cooperation with corresponding surfaces both on the clamping sleeve and on the shaft are located within the axial extent of the raceway of the inner ring 2. This means that the bearing 1 can be secured to the shaft 3 while simultaneously ensuring that a desired pretensioning of the bearing is maintained both if the bearing is secured directly to the shaft or via an intermediate clamping sleeve.

The advantages gained by combining in one inner ring a cylindric and tapering bore are, beside lower manufacturing and store-keeping costs, that it at shaft mounting, i.e. mounting directly upon the shaft, is possible to use a shaft of bigger diameter for the same bearing. The inner ring furthermore will get a lower susceptibility to creeping, due to a higher concentration of the surface pressure in the pressing joint. At mounting with sleeve it is in a corresponding manner not necessary to increase the size of the bearing as compared to mounting directly on the shaft.

The size of the cylindrical surfaces 5 is adapted to appropriate surface pressures against the shaft 3 and which corresponds to the material in question, e.g. steel or plastic material. The positioning of the cylindrical or tapering surfaces 5 and 6, respectively, can be adapted to the resultant load in the bearing type. Such a possible positioning is symmetrical to the radial centre line, see Fig. 1.

## Claims

1. An arrangement for securing an inner ring (2) of a bearing to a shaft (3) either directly on the shaft (3) or via a clamping sleeve (7), wherein said inner ring (2) is provided with a bore (4) for receiving said shaft (3) therein, said bore having a first surface (5) of a shape, such as cylindrical or tapering, corresponding to the shape of the shaft (3) and a second surface (6, 11, 13) corresponding to the shape of a clamping sleeve (7) **characterized in that** said first surface (5) comprises a plurality of first surface portions, and said second surface (6, 11, 13) comprises a plurality of second surface portions, whereby said first surface portions are arranged at opposed ends of the inner ring (2) and separated by said second surface portions, both first surface portions and second surface portions being located within the axial extent of the raceway of the inner ring (2) and whereby further the second surface portions have a tapering shape with their respective smallest diameter corresponding to the diameter of the most adjacent first surface portion.

2. An arrangement according to claim 1, wherein the second surface portions are tapering portions (6, 13) and/or thread flanks (11), which form a small angle relative to the longitudinal direction of the clamping sleeve (7), preferably smaller than the friction angle in the respective contact surfaces.

3. An arrangement according to claim 1 or 2, wherein first surface portions (5) are arranged at the opposed distal ends of the inner ring (2).

4. An arrangement according to claim 3, wherein the first surface comprises four axially spaced first surface portions (5) separated by three second surface portions (6).

5. An arrangement according to claim 3 or 4, wherein the first surface portions (5) are cylindrical and the second surface portions (6) have their conicalities in the same direction.

6. An arrangement according to claim 1 or 2, wherein the first surface portions (5) are cylindrical and the second surface portions (11, 13) comprise portions having their conicalities in opposite directions.

7. An arrangement according to claim 6, wherein the second surface portions comprise a tapering portion (13) having its conicality in a first direction and a threaded portion with a thread flank having its conicality in a second direction opposed to said first direction.

8. An arrangement according to claim 7, wherein first surface portions (5) are arranged at the opposed distal ends of the inner ring (2).

9. An arrangement according to claim 8, wherein the first surface comprises four axially spaced first surface portions (5), and wherein the tapering portion (13) is located between two adjacent first surface portions at one end of the inner ring (2).

## Patentansprüche

1. Eine Einrichtung zum Befestigen eines Innenringes (2) eines Lagers auf einer Welle (3), entweder direkt auf der Welle (3) oder mittels einer Klemmhülse (7), bei welcher der Innenring (2) mit einer Bohrung (4) versehen ist, um darin die Welle (3) aufzunehmen, wobei diese Bohrung eine der Form der Welle (3) entsprechende erste Fläche (5) mit einer Form, die zylindrisch oder kegelig sein kann, sowie eine der Form der Klemmhülse (7) entsprechende zweite Fläche (6, 11, 13) aufweist, dadurch gekennzeichnet, daß die erste Fläche (5) mehrere erste Teilflächen und die zweite Fläche (6, 11, 13) mehrere zweite Teilflächen aufweist, wobei die ersten Teilflächen an entgegengesetzten Enden des Innenringes (2) angeordnet und durch die zweiten Teilflächen voneinander getrennt sind, sowohl erste Teilflächen als auch zweite Teilflächen innerhalb der axialen Breite der Laufbahn des Innenringes (2) angeordnet sind und wobei ferner die zweiten Teilflächen eine kegelige Form besitzen, deren kleinster Durchmesser dem Durchmesser der unmittelbar angrenzenden ersten Teilfläche entspricht.

2. Eine Einrichtung nach Anspruch 1, bei der die zweiten Teilflächen als kegelige Teilflächen (6, 13) und/oder Gewindeflanken (11) ausgebildet sind, die relativ zur Längsrichtung der Klemmhülse (7) einen kleinen Winkel bilden, der vorzugsweise kleiner als der Reibungswinkel an den betreffenden Kontaktflächen ist.

3. Eine Einrichtung nach Anspruch 1 oder 2, bei der erste Teilflächen (5) an entgegengesetzt entfernten Enden des Innenringes (2) angeordnet sind.

4. Eine Einrichtung nach Anspruch 3, bei der die erste Fläche von vier, im axialen Abstand voneinander angeordneten ersten Teilflächen (5), die durch drei zweite Teilflächen (6) voneinander getrennt sind, gebildet ist.

5. Eine Anordnung nach Anspruch 3 oder 4, bei der die ersten Teilflächen (5) zylindrisch und die zweiten Teilflächen (6) mit in ein und dieselbe Richtung orientierten Kegeligkeiten ausgebildet sind.

6. Eine Einrichtung nach Anspruch 1 oder 2, bei der die ersten Teilflächen (5) zylindrisch ausgebildet sind und die zweiten Teilflächen (11, 13) Abschnitte mit in entgegengesetzte Richtungen orientierten Kegeligkeiten aufweisen.

7. Eine Einrichtung nach Anspruch 6, bei der die zweiten Teilflächen einen kegeligen Abschnitt (13) mit einer in eine erste Richtung orientierten Kegeligkeit und einen Gewindeabschnitt mit einer in eine zweite, zur besagten ersten Richtung entgegengesetzte Richtung orientierte Kegeligkeit aufweisen.

8. Eine Einrichtung nach Anspruch 7, bei der erste Teilflächen (5) an entgegengesetzt entfernten Enden des Innenringes (2) angeordnet sind.

9. Eine Einrichtung nach Anspruch 8, bei der die erste Fläche durch vier, im axialen Abstand voneinander angeordnete erste Teilflächen (5) gebildet ist und bei der an einem Ende des Innenringes (2) der kegelige Abschnitt (13) zwischen zwei angrenzenden ersten Teilflächen angeordnet ist.

**Revendications**

1. Système de fixation d'une bague intérieure (2) de roulement sur un arbre (3), soit directement sur l'arbre (3) ou par l'intermédiaire d'un manchon de serrage (7), ladite bague intérieure (2) étant munie d'un alésage (4) pour recevoir ledit arbre (3) et ledit alésage ayant une première surface (5) d'un profil, tel que cylindrique ou conique, correspondant au profil de l'arbre (3), et une seconde surface (6, 11, 13) correspondant au profil d'un manchon de serrage (7) caractérisé en ce que ladite première surface (5) comprend une pluralité de premières portions de surface, et ladite seconde surface (6, 11, 13) comprend une pluralité de secondes portions de surface, lesdites premières portions de surface étant disposées aux extrémités opposées de la bague intérieure (2) et séparées par lesdites secondes portions de surface, les premières portions de surface de même que les secondes portions de surface étant positionnées dans l'étendue axiale du chemin de roulement de la bague intérieure (2) et, en outre les secondes portions de surface ayant un profil conique avec leur plus petit diamètre respectif correspondant au diamètre de la première portion de surface la plus voisine..

2. Système selon revendication 1, dans lequel les secondes portions de surface sont les portions coniques (6, 13) et/ou des flancs de filets coniques (11) qui forment un angle réduit par rapport à la direction longitudinale du manchon de serrage (7), de préférence un angle plus petit que l'angle de frottement dans les surfaces de contact respectives.

3. Système selon revendication 1 ou 1, dans lequel les premières portions de surface (5) sont disposées aux extrémités opposées de la bague intérieure (1).

4. Système selon revendication 3, dans lequel la première surface comprend quatre premières portions de surface espacées axialement (5) séparées par trois secondes portions de surface (6).

5. Système selon revendication 1 ou 4, dans lequel les premières portions de surface (5) sont cylindriques et les secondes portions de surface (6) ont leur conicité orientée dans la même direction.

6. Système selon revendication 1 ou 2, dans lequel les premières portions de surface (5) sont cylindriques et les secondes portions de surface (11, 13) comprennent des portions dont la conicité est orientée en sens opposé.

7. Système selon revendication 6, dans lequel les secondes portions de surface comprennent une portion conique (13) ayant sa conicité orientée dans une première direction et une portion filetée avec un flanc de filet ayant sa conicité orientée dans une seconde direction opposée à ladite première direction.

8. Système selon revendication 7, dans lequel les premières portions de surface (5) sont disposées aux extrémités opposées de la bague intérieure (2).

9. Système selon revendication 8, dans lequel la première surface comprend quatre premières portions de surface (5) espacées axialement, et où la portion conique (13) est située entre deux premières portions de surface adjacentes, à une extrémité de la bague intérieure (2).

# FIG 1

# FIG 2

# FIG 3